Europäisches Patentamt

(19) European Patent Office

Office européen des brevets

(11) Publication number : **0 383 308 B1**

(12) **EUROPEAN PATENT SPECIFICATION**

(45) Date of publication of patent specification :
20.09.95 Bulletin 95/38

(51) Int. Cl.⁶ : **H04N 1/46**

(21) Application number : **90102904.1**

(22) Date of filing : **14.02.90**

(54) **Image reading device.**

(30) Priority : **15.02.89 JP 35692/89**

(43) Date of publication of application :
**22.08.90 Bulletin 90/34**

(45) Publication of the grant of the patent :
**20.09.95 Bulletin 95/38**

(84) Designated Contracting States :
**DE FR GB IT**

(56) References cited :
**EP-A- 0 167 747**
**EP-A- 0 240 000**
**EP-A- 0 302 230**
**US-A- 4 540 996**
**APPLIED OPTICS, vol. 17, no. 15, 1st August
1978, pages 2273-2279; H. DAMMANN: "Color
separation gratings"**
**IDEM**

(73) Proprietor : **CANON KABUSHIKI KAISHA
30-2, 3-chome, Shimomaruko,
Ohta-ku
Tokyo (JP)**

(72) Inventor : **Setani, Michitaka, No. 305
Miyamaedaira Sanhiru
13-29 Kodai 2-chome,
Miyamae-ku
Kawasaki-shi, Kanagawa-ken (JP)**

(74) Representative : **Tiedtke, Harro, Dipl.-Ing. et al
Patentanwaltsbüro
Tiedtke-Bühling-Kinne & Partner
Bavariaring 4
D-80336 München (DE)**

## Description

The present invention relates to a device for reading a color image utilizing a solid-state image sensor device or the like, and in particular to a color image reading device in which the light from an object is guided to a sensor such as a solid-state image sensor through an imaging optical system and color separating means.

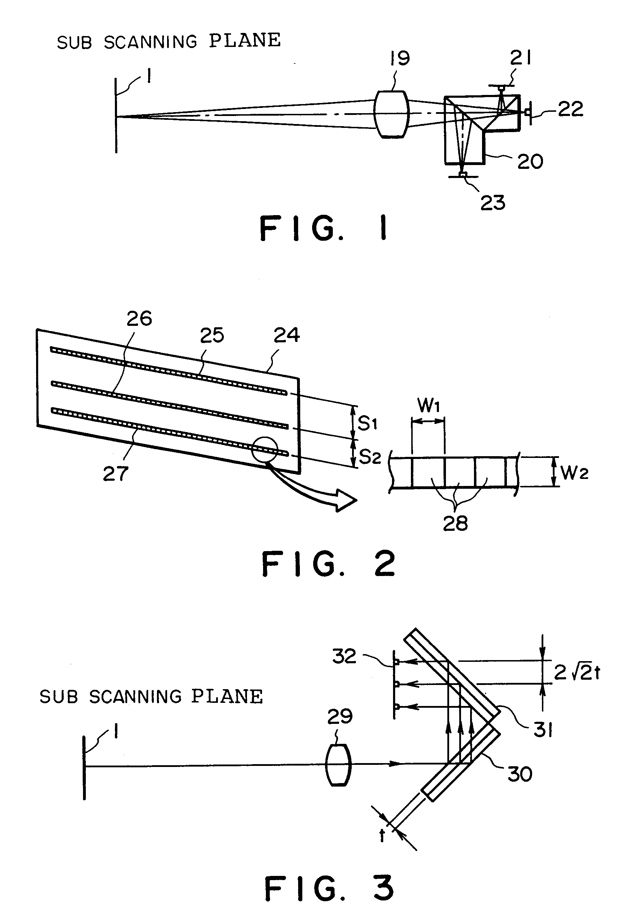

Conventionally a device as shown in Fig. 1 is already known for line scanning an object such as an original document and reading the color image thereof with a solid-state image sensor array, such as a CCD sensor.

The information on a part of an original surface 1 is illuminated by the light from an illuminating light source (not shown), and is read by the reflected light which is guided through an imaging optical system, then is separated into three colors through a three-piece (3P) prism 20, the corresponding beams being focused on three line CCD sensors 21, 22, 23.

However such conventional structure is inevitably expensive since it requires three independent sensors and the 3P prism requiring high precision in the manufacture. It is also associated with the difficulty in manufacture, since the light beams have to be aligned with the sensors 21, 22, 23 independently.

It is therefore conceivable to prepare three line sensors on a same substrate with a certain distance therebetween, thus obtaining a monolithic 3-line sensor 24 shown in Fig. 2. In such monolithic sensor, the distances $s_1$, $s_2$ between three lines 25, 26 and 27 are in the order of 0.1 to 0.2 mm depending on various manufacturing conditions, and the dimensions $w_1$ x $w_2$ of each single photosensor 28 is in the order of 7 x 7 $\mu$m to 10 x 10 $\mu$m. Fig. 3 shows a structure of a color image reading device as described in EP-A-02 400 00 utilizing such monolithic 3-line sensor as the image sensor, wherein, in scanning the information on an original surface 1 in the sub scanning direction, the light from said surface 1 is guided through an imaging optical system 29, then separated into three light beams of three colors by color-separating beam splitters 30, 31 with a dichroic selective transmission film, and said three light beams are focused on respectively corresponding line sensors of the monolithic 3-line sensor 32.

However, as shown in Fig. 3, a plate thickness t of the beam splitters 30, 31 provides a line distance $2\sqrt{2}t$ on the sensor 32. If said distance is selected in the order of 0.1 to 0.2 mm as explained above, the plate thickness t is about 35 to 70 $\mu$m, which is difficult to achieve in manufacture, in consideration of the surface flatness required.

There is also known a color image reading device employing a blazed diffraction grating instead of the dichroic mirror, as disclosed in US-A-42 77 138 and in "Applied Optics", vd. 17, No. 15, pages 2273 to 2279, (August 1, 1987). Said device employs an optical system involving a blazed diffraction grating for color separation.

However such structure only considers the light coming from a point in the object field, but does not pay any attention to so-called image angle characteristics resulting from the presence of a certain image width in the main scanning direction in the object field.

In particular, a blazed diffraction grating may result in wavelength aberrations and, therefore, in color aberrations along the length of the plural-line sensor and, in addition, it may result in focusing errors along the length of the plural-line sensor.

An image reading device comprising the features of the pre-characterizing clause of claim 1 is known from EP-A-0240000.

It is the object underlying the invention to improve the image reading device comprising the features of the pre-characterizing clause of claim 1 such that a sufficient distance between the one-dimensional arrays of the plural-line sensor may be achieved without very thin glass plates being required in the color-separating device. In addition, the plural color-separated lights directed to corresponding lines of the plural-line sensor respectively shall be free from image angle dependent color separation and focusing errors.

According to the invention, this object is achieved by the image reading device as defined by claim 1.

Figs. 1 and 3 are views showing a conventional color image reading device;

Fig. 2 is a schematic view of a monolithic 3-line sensor;

Fig. 4 is a view of a first embodiment of the image reading device of the present invention, along a main scanning plane;

Fig. 5 is a view of-the first embodiment shown in Fig. 4, along a sub scanning plane perpendicular to the main scanning plane;

Fig. 6 is a partial magnified view of Fig. 5;

Fig.- 7 is a view of a one-dimensional transmissive glazed diffraction grating;

Fig. 8 is a schematic view showing image formation in a non-telecentric imaging optical system;

Fig. 9 is a view of a second embodiment employing a one-dimentional reflective blazed diffraction grating; and

Figs. 10A and 10B are cross-sectional views of a third embodiment of the image reading device of the pres-

EP 0 383 308 B1

ent invention, respectively along a main scanning plane and along a sub scanning plane.

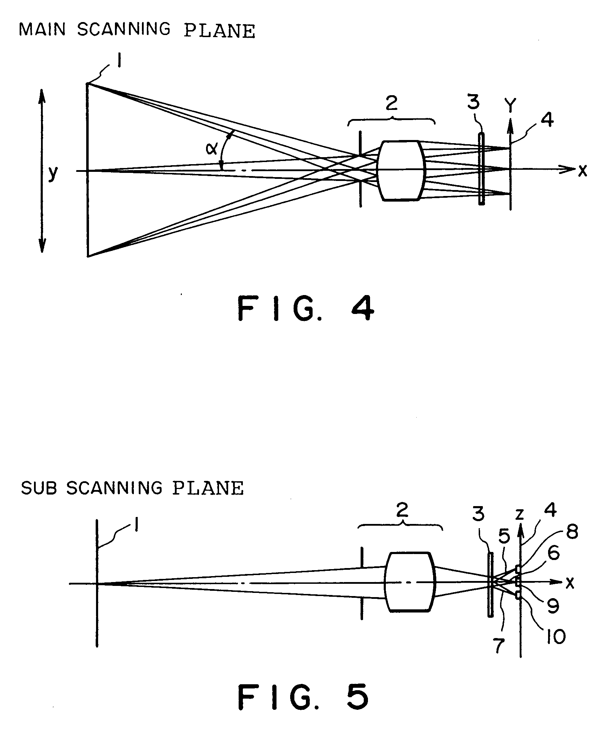

Figs. 4 and 5 are cross-sectional views of a first embodiment of the image reading device of the present invention, respectively along a main scanning plane and along a sub scanning plane perpendicular to said main scanning plane. Image information on an original surface 1 constituting the object is line scanned in a sub scanning direction Z by means of a mirror (not shown) or the like positioned between said original surface 1 and a telecentric imaging optical system 2, and the light bearing the image information is guided, through said telecentric imaging optical system 2, to a three color-separating one-dimensional blazed diffraction grating 3. The image information on the original surface 1 is read by the relative movement in the sub scanning direction between the original surface 1 and an image reading unit (imaging optical system 2, diffraction grating 3 and sensor 4). The information-bearing light beam is split in the Z-direction into light beams 5, 6, 7 of three primary colors for image reading, for example red (R), green (G) and blue (B), which are respectively focused on sensor arrays 8, 9, 10 on a monolithic 3-line sensor 4. The sensor-bearing face of the sensor 4 is parallel to the sub scanning direction.

Each of the sensor arrays 8, 9, 10 of the sensor 4 extends parallel to the main scanning direction, represented as Y in the drawing. Said sensor 4 is a monolithic 3-line sensor provided on a same substrate with three one-dimensional sensor arrays which are mutually spaced by a predetermined distance in a direction perpendicular to the direction of said arrays.

The one-dimensional blazed diffraction grating 3 is provided between the imaging optical system 2 and the sensor 4, for separating the light from the object into plural light beams of different colors and guiding said light beams to respectively corresponding sensor arrays.

The original surface 1 is illuminated by an unrepresented light source.

Said one-dimensional blazed diffraction grating has a constant grating pitch in the sub scanning direction and a constant grating thickness in the main scanning direction.

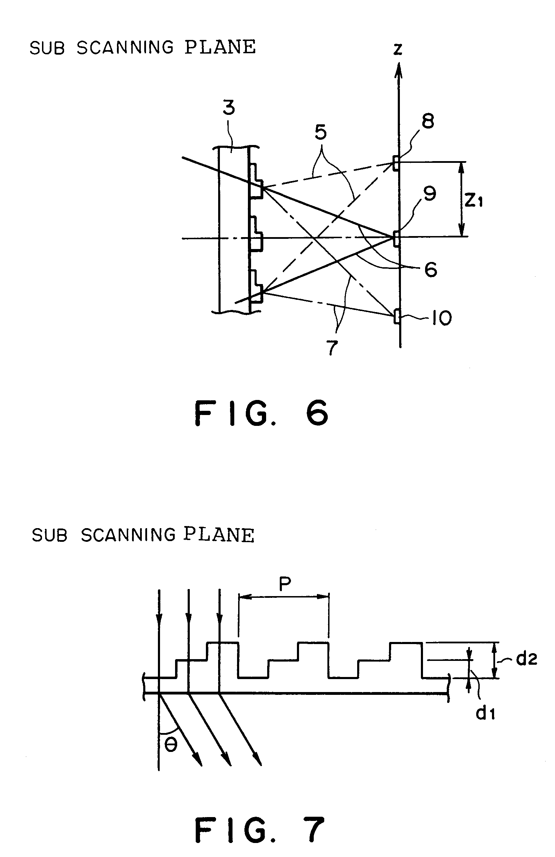

The one-dimensional blazed diffraction grating is disclosed in "Applied Optics", Vol. 17, No. 15,. pages 2273 - 2279 (Aug. 1, 1978), and has a structure as shown in Fig. 6 which is a partial magnified view of Fig. 5, and in Fig. 7 showing the structure of a one-dimensional transmissive blazed diffraction grating.

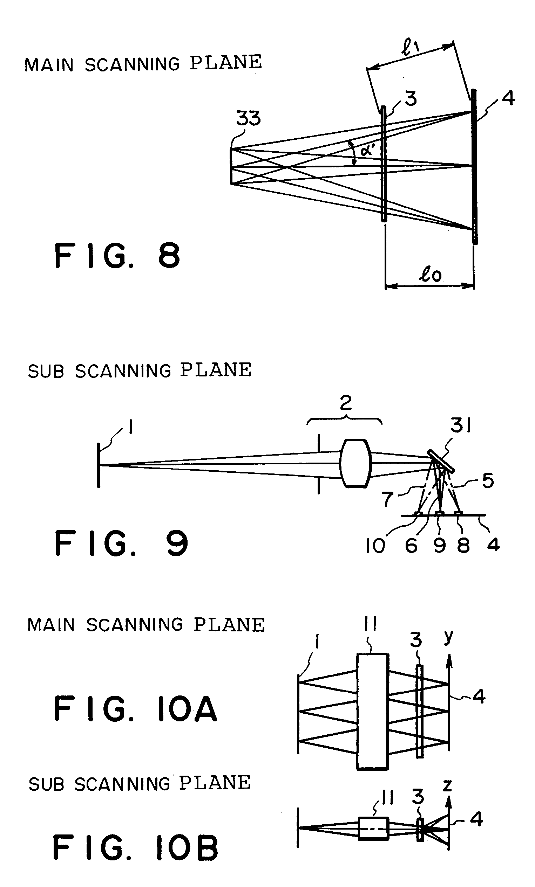

In the present embodiment, because of the use of a telecentric imaging optical system 2, the principal ray always enters the blazed diffraction grating 3 perpendicularly, as shown in Fig. 4, even in the light beam coming from a peripheral area of the finite image reading width y, so that the drawback related to the image angle characteristics is no longer present. Fig. 8 is a schematic view showing image formation in a conventional non-telecentric imaging system.

The above-mentioned point will be explained more detailedly in the following. In practice there is required a certain image reading width y as shown in Fig. 4, so that a certain image angle $\alpha$ is formed with respect to the imaging optical system. Consequently, in the main scanning plane, the principal ray of a light beam coming from an off-axis point enters the imaging optical system with an angle $\alpha$ thereto, and, in an ordinary imaging optical system, energes with an angle $\alpha'$ from the exit pupil 33 thereof as shown in Fig. 8. Consequently, the distance from the blazed diffraction grating 3 to the array-bearing face of the 3-line sensor 4 is, as shown in Fig. 8, $\ell_0$ for an axial ray, but is $\ell_1 = \ell_0/\cos\alpha'$ for an off-axis ray with an incident angle $\alpha$ and an emerging angle $\alpha'$ from the exit pupil 33. In an ordinary optical system, $\alpha'$ is approximately equal to $\alpha$.

On the other hand, in the blazed diffraction grating 3 with a structure as shown in Fig. 7, the first-order diffraction angle $\theta$ is given by an equation $P\sin\theta = \lambda$ wherein P is the pitch of grating, and $\lambda$ is the wavelength. In an ordinary non-telecentric imaging optical system, the resolving distance $z_1$ on the sensor surface is, as shown in Fig. 6, $z_1 = \ell_0\tan\theta$ for an axial ray or $z_1 = \ell_1\tan\theta = \ell_0\tan\theta/\cos\alpha$ for an off-axis ray, which are mutually different. Consequently the light beams of three colors cannot be properly focused on linear sensor arrays 8, 9, 10.

As an example, in a case of $P = 60$ $\mu$m, $\lambda = 540$ nm (green) and image angle $\alpha \simeq \alpha' = 20°$, the aberration between the axial ray and off-axis ray in the Z-direction becomes as large as about 12 $\mu$m, which is apparently in excess of the aforementioned element size of 7 x 7 to 10 x 10 $\mu$m of the sensor 4. Said aberration can be reduced theoretically by decreasing the image angle $\alpha$, but it cannot be reduced easily in order to compactize the entire device.

There is another drawback resulting from the relation $\alpha \simeq \alpha'$. When a principal ray enters the diffraction grating 3 with thicknesses $d_1$, $d_2$ as shown in Fig. 7, with an angle $\alpha'$ in the main scanning direction which is perpendicular to the plane of drawing, the effective optical path length for such oblique principal ray becomes different from that of a perpendicularly entering principal ray, so that the diffracted wavelength becomes different in these principal rays.

This phenomenon is based on a fact that the phase difference resulting from the thicknesses $d_1$, $d_2$ of the diffraction grating 3 is governed by the following relationship:

3

$$\Phi_i = 2\pi \left[ \frac{n_\lambda^2}{\sqrt{n_\lambda^2 - \sin^2 \alpha'}} \sim \frac{1}{\cos \alpha'} \right] \times \frac{d_i}{\lambda} \ , \ i = 1, \ 2$$

wherein $\Phi_i$ is the phase difference (rad), and $n_\lambda$ is the refractive index of the medium constituting the grating for the light of wavelength $\lambda$. Thus the wavelength $\lambda$ providing a desired phase difference $\Phi_i$ in a certain order of diffraction varies with the incident angle $\alpha'$ for a given grating thickness $d_i$. This means that, in reading image information on a line, the wavelength distribution of the light entering each line sensor is shifted as the light moves from the axial position to the off-axis position, thus eventually giving rise to aberration in color.

For example, in case of a blazed diffraction grating of two-stepped structure shown in Fig. 7, with $d_1$ = 3100 nm, $d_2$ = 6200 nm, $n_\lambda$ = 1.5; $\Phi_1 = 6\pi$ and $\Phi_2 = 12\pi$, the wavelength of the O-th diffracted light is 516.7 nm for an axial ray ($\alpha'$ = 0° but is 492.3 nm for an off-axis ray ($\alpha'$ = 20°), thus causing a shift of about 24 nm.

The telecentric imaging optical system 2 is employed for avoiding the above-mentioned drawback resulting from the image angle. The telecentric imaging optical system has the entrance pupil on the front focal plane as shown in Fig. 4, so that the exit pupil is present at an infinite distance. Thus all the principal rays, including that corresponding to the image angle $\alpha$, emerge parallel to the optical axis. Consequently the emerging angle $\alpha'$ from the exit pupil is always zero regardless of the image angle $\alpha$. The distance from the blazed diffraction grating 3 to the face of the 3-line sensor 4 is always $\ell_0$ regardless of the image angle $\alpha$, and $\Phi_i$ remains always constant because the emerging angle $\alpha'$ is zero. It is therefore possible to prevent the aberration in the image position in the Z-direction and in the diffracted wavelength.

In the foregoing explanation the imaging optical system 2 is assumed to be completely telecentric, but a substantially telecentric system can be employed in practice without difficulty.

For example, in a blazed diffraction grating of two-stepped structure shown in Fig. 7, with $d_1$ = 3100 nm, $d_2$ = 6200 nm, $n_\lambda$ = 1.5, $\Phi_1 = 6\pi$ and $\Phi_2 = 12\pi$, the wavelength of the O-th order diffracted light is 516.7 nm for an axial ray ($\alpha'$ = 0°) but is 511.2 nm, 503.8 nm or 492.3 nm respectively for an off-axis ray with $\alpha'$ = 10°, 15° or 20°.

Thus the shift in wavelength with respect to the axial ray ($\alpha'$ = 0°) is about 5 nm or less within the range of emerging angle of ±10°, and said shift is tolerable to such extent in consideration of color reproducibility. Stated differently, an imaging optical system showing telecentric property within an emerging angle range of ±10° can be employed without practical drawback.

Fig. 9 is a cross-sectional view of a second embodiment along the sub scanning plane, wherein a one-dimensional reflective blazed diffraction grating 31 is employed for obtaining a phase difference of four times or larger (for $n_\lambda$ = 1.5), in comparison with the aforementioned transmissive diffraction grating. Consequently the films of the diffraction grating can be made thinner and are easier to prepare.

The telecentric imaging optical system employed in the foregoing embodiments is a reduction optical system, but the same advantage can be attained with a same-size optical system.

For example a Selfoc lens array (trade name) 11 shown in Fig. 10 constitutes a telecentric optical system capable of providing a same-size erect image, and can provide the same advantage as in the first embodiment, when employed as the imaging optical system. Figs. 10A and 10B show a third embodiment of the image reading device of the present invention, seen respectively in a main scanning plane and a sub scanning plane.

As explained in the foregoing, the present invention provides an image reading device adapted for realizing a compact and inexpensive color image reading apparatus, which forms, respectively on linear sensor arrays of a sensor, images separated satisfactorily in position and in color without aberrations in the image positions or in the diffracted wavelength even for a wide image reading width.

**Claims**

1. An image reading device, comprising:
   an imaging optical system (2, 11) for forming the image of an object (1) at an image plane;
   a plural-line sensor (4) containing plural one-dimensional arrays (8, 9, 10) formed on a substrate, wherein the sensor-bearing surface of said plural-line sensor (4) is positioned at said image plane; and
   a color-separating device positioned in the optical path between said imaging optical system (2, 11) and said sensor (4) and adapted to separate the light from said object (1) into plural color components;
   wherein the object (1) is scanned in a main scanning plane along a finite image reading width (y),
   **characterized in that**

said color-separating device is formed by a blazed diffraction grating (3, 31);

and in that said imaging optical system (2, 11) is telecentric within said main scanning plane containing said finite image reading width (y) and directs the principal rays coming from said object (1), including those coming from the peripheral areas of said finite image reading width (y), to enter said blazed diffraction grating (3, 31) perpendicularly.

2. An image reading device according to claim 1, wherein said plural-line sensor (4) is a monolithic three-line sensor having three one-dimensional sensor arrays (8, 9, 10) which are mutually separated by a finite distance in a direction perpendicular to the direction of array of said sensor arrays (8, 9, 10).

3. An image reading device according to claim 2, wherein said object (1) is also scanned in a sub scanning direction which is perpendicular to the directions of array of said sensor arrays (8, 9, 10).

4. An image reading device according to claim 3, wherein the sensor-bearing surface of said monolithic 3-line sensor (4) is positioned parallel to said sub scanning direction.

5. An image reading device according to claim 1, wherein said imaging optical system is a reduction optical system (2).

6. An image reading device according to claim 1, wherein said blazed diffraction grating (3, 31) is a one-dimensional blazed diffraction grating.

7. An image reading device according to one of claims 1 to 6, wherein said blazed diffraction grating (3) comprises a transmissive type.

8. An image reading device according to one of claims 1 to 6, wherein said blazed diffraction grating (31) comprises a reflective type.

9. An image reading device according to one of claims 1 to 4 and 6 to 8, wherein said imaging optical system (11) provides a same-size erect image.

10. An image reading device according to one of claims 1 to 9, wherein said imaging optical system (2, 11) shows a telecentric property within an emerging angle range of ±10%.

**Patentansprüche**

1. Bildlesevorrichtung, umfassend:

ein optisches Abbildungssystem (2, 11) zum Erzeugen des Bildes von einem Objekt (1) bei einer Bildebene;

einen Vielzeilen-Sensor (4), der mehrere eindimensionale Anordnungen (8, 9, 10) enthält, die auf einem Substrat gebildet sind, wobei sich die Sensor-tragende Oberfläche des Vielzeilen-Sensors (4) bei der Bildebene befindet; und

eine Farbtrennvorrichtung, die sich in dem optischen Weg zwischen dem optischen Abbildungssystem (2, 11) und dem Sensor (4) befindet und dazu geeignet ist, das Licht von dem Objekt (1) in mehrere Farbkomponenten zu trennen;

wobei das Objekt (1) in einer Haupt-Abtastebene entlang einer endlichen Bildlesebreite (y) abgetastet wird,

**dadurch gekennzeichnet, daß**

die Farbtrennvorrichtung aus einem Beugungsgitter (3, 31) mit bevorzugter Beugungsordnung gebildet ist;

und das optische Abbildungssystem (2, 11) telezentrisch innerhalb der Haupt-Abtastebene ist, die die endliche Bildlesebreite (y) enthält, und die von dem Objekt (1) kommenden Hauptstrahlen, einschließlich solchen, die von den Randflächen der endlichen Bildlesebreite (y) kommen, so richtet, daß sie senkrecht in das Beugungsgitter (3, 31) mit bevorzugter Beugungsordnung eintreten.

2. Bildlesevorrichtung nach Anspruch 1, bei der der Vielzeilensensor (4) ein monolithischer Dreizeilensensor mit drei eindimensionalen Sensoranordnungen (8, 9, 10) ist, die voneinander durch einen endlichen Abstand in einer Richtung senkrecht zu der Anordnungsrichtung der Sensoranordnungen (8, 9, 10) getrennt sind.

3. Bildlesevorrichtung nach Anspruch 2, bei der das Objekt (1) auch in einer Neben-Abtastrichtung, die senkrecht zu den Anordnungsrichtungen der Sensoranordnungen (8, 9, 10) ist, abgetastet wird.

4. Bildlesevorrichtung nach Anspruch 3, bei der sich die Sensor-tragende Oberfläche des monolithischen 3-Zeilensensors (4) parallel zu der Neben-Abtastrichtung befindet.

5. Bildlesevorrichtung nach Anspruch 1, bei der das optische Abbildungssystem ein optisches Reduktionssystem (2) ist.

6. Bildlesevorrichtung nach Anspruch 1, bei der das Beugungsgitter (3, 31) mit bevorzugter Beugungsordnung ein eindimensionales Beugungsgitter mit bevorzugter Beugungsordnung ist.

7. Bildlesevorrichtung nach einem der Ansprüche 1 bis 6, bei der das Beugungsgitter (3) mit bevorzugter Beugungsordnung einen Transmissionstyp umfaßt.

8. Bildlesevorrichtung nach einem der Ansprüche 1 bis 6, bei der das Beugungsgitter (31) mit bevorzugter Beugungsordnung einen Reflexionstyp umfaßt.

9. Bildlesevorrichtung nach einem der Ansprüche 1 bis 4 und 6 bis 8, bei der das optische Abbildungssystem (11) ein mit derselben Größe aufgerichtetes Bild bereitstellt.

10. Bildlesevorrichtung nach einem der Ansprüche 1 bis 9, bei der das optische Abbildungssystem (2, 11) eine telezentrische Eigenschaft innerhalb eines Austrittswinkelbereichs von ± 10 % zeigt.

**Revendications**

1. Dispositif de lecture d'image, comprenant :
un système (2, 11) optique de formation d'image pour former l'image d'un objet (1) sur un plan image;
un capteur (4) à plusieurs lignes contenant plusieurs groupements (8, 9, 10) monodimensionnels formés sur un substrat, la surface portant les capteurs dudit capteur (4) à plusieurs lignes étant située dans ledit plan image; et
un dispositif de séparation des couleurs situé sur le trajet optique entre ledit système (2, 11) optique de formation d'image et ledit capteur (4) et conçu pour séparer la lumière provenant dudit objet (1) en plusieurs composantes de couleurs;
dans lequel l'objet (1) est balayé dans un plan de balayage principal suivant une largeur (y) de lecture d'image finie,
caractérisé en ce que
ledit dispositif de séparation des couleurs est formé d'un réseau (3, 31) de diffraction rainuré;
et en ce que ledit système (2, 11) optique de formation d'image est télécentrique dans ledit plan de balayage principal contenant ladite largeur (y) de lecture d'image finie et dirige les rayons principaux venant dudit objet (1), y compris ceux venant des zones périphériques de ladite largeur (y) de lecture d'image finie, pour qu'ils pénètrent perpendiculairement dans ledit réseau (3, 31) de diffraction rainuré.

2. Dispositif de lecture d'image selon la revendication 1, dans lequel ledit capteur (4) à plusieurs lignes est un capteur monolithique à trois lignes ayant trois groupements (8, 9, 10) de capteurs monodimensionnels qui sont mutuellement séparés d'une distance finie dans une direction perpendiculaire à la direction de groupement desdits groupements (8, 9, 10) de capteurs.

3. Dispositif de lecture d'image selon la revendication 2, dans lequel ledit objet (1) est également balayé dans une direction de balayage secondaire qui est perpendiculaire aux directions de groupement desdits groupements (8, 9, 10) de capteurs.

4. Dispositif de lecture d'image selon la revendication 3, dans lequel la surface portant les capteurs dudit capteur (4) monolithique à trois lignes est placée parallèlement à ladite direction de balayage secondaire.

5. Dispositif de lecture d'image selon la revendication 1, dans lequel ledit système optique de formation d'image est un système (2) optique à réduction.

6. Dispositif de lecture d'image selon la revendication 1, dans lequel ledit réseau (3, 31) de diffraction rainuré est un réseau de diffraction rainuré monodimensionnel.

7. Dispositif de lecture d'image selon l'une des revendications 1 à 6, dans lequel ledit réseau (3) de diffraction rainuré est du type transmissif.

8. Dispositif de lecture d'image selon l'une des revendications 1 à 6, dans lequel ledit réseau (31) de diffraction rainuré est du type réfléchissant.

9. Dispositif de lecture d'image selon l'une des revendications 1 à 4 et 6 à 8, dans lequel ledit système (11) optique de formation d'image fournit une image redressée de taille inchangée.

10. Dispositif de lecture d'image selon l'une des revendications 1 à 9, dans lequel ledit système (2, 11) optique de formation d'image présente une propriété télécentrique à l'intérieur d'une gamme d'angles de sortie de ± 10%.

SUB SCANNING PLANE

FIG. 1

FIG. 2

SUB SCANNING PLANE

FIG. 3

MAIN SCANNING PLANE

# FIG. 4

SUB SCANNING PLANE

# FIG. 5

SUB SCANNING PLANE

# FIG. 6

SUB SCANNING PLANE

# FIG. 7

MAIN SCANNING PLANE

# FIG. 8

SUB SCANNING PLANE

# FIG. 9

MAIN SCANNING PLANE

# FIG. IOA

SUB SCANNING PLANE

# FIG. IOB